# EUROPEAN PATENT APPLICATION

(11) **EP 3 336 783 A1**
(43) Date of publication of application: **20.06.2018**
(21) Application number: 16204985.2
(22) Date of filing: 19.12.2016
(51) Int. Cl.: G06Q 10/08, G06Q 50/02, A01K 29/00

(54) **METHOD AND LIGHT ASSEMBLY FOR TRACKING LIVESTOCK INSIDE A BUILDING**

(71) Applicant: Farmic AB, 931 27 Skellefteå (SE)
(72) Inventor: Forsén, Gösta, 146 38 Tullinge (SE)
(74) Representative: Bergenstråhle Group AB

(57) **Abstract**

The present invention relates to a method performed by a light assembly (100) of tracking livestock inside of a building for keeping the livestock. The light assembly (100) is arranged above the livestock. The light assembly (100) comprises a light source (10), a camera (12), a controller (14) and a communication interface (16). The method controls (S100) the output of the light source (10) with the controller (14) such that a light condition inside the building is adapted to a diurnal rhythm of the livestock. The camera (12) retrieves (S110) a live view of the livestock in a field of view of the camera (12) and transmits (S120) with the communication interface (16) the retrieved live view of the livestock to a monitoring node (200).

## Description

### Technical field

The present invention generally relates to tracking of livestock. In particular the present invention relates to a method, a light assembly for tracking livestock inside of a building for keeping the livestock. Furthermore, the present invention also relates to a computer program and a computer program product for implementing the method.

### Background art

From GB 2387465 a livestock monitoring system is known. The animals are provided with Radio Frequency Identification, RFID, animal tags. The RFID animal tags also includes a Global Positioning System, GPS, for real-time monitoring of the animal location. Animal identifiers and locations are uploaded in a local area wireless network to a receiver, which in turn uploads the data to a web server linked to a host processor for databases. The system enables recording of movement history of individual animals. However, the system is very complex, with a multitude of subsystems, and it relies on a multitude of radio interface standards. Further, the GPS has very limited coverage indoors. This means that the system disclosed in GB2387465 may be relatively expensive and time consuming to commission, and may be relatively more suitable for outdoor monitoring of herds of livestock. Today however, it is more likely that an animal is stabled during at least a period of its life.

FR2759541 discloses a camera system for detecting livestock in heat. Each animal is equipped with a tag marked with an identity code intended to be read by a camera from a distance. A camera is placed on a side wall. Regardless of placement, the disclosed camera system is unable to distinguish between multiple locations - and therefore further fail to register movements - along the camera's line-of-sight. As an improvement it is suggested that the camera be placed on rails. It is also suggested that the identification tag be placed in an upright and elevated position, on a collar adapted for each individual animal's physiognomy.

Yet, still with these adaptions, it is believed that the disclosed camera system may only detect heat related "hyperactivity" through pulse-shaped binary readings. Further, in a non-clean environment, such as in a livestock stable, optical reading of an identification code from a distance is likely to be obstructed by dirt or debris covering the tag. Such obstruction will render the disclosed system non-functional, since it relies on an initial identification. Hence, FR2759541, much like GB2387465 discloses a rigid system, with the added drawback of being less appropriate in non-clean environments. Lastly, the disclosed system, while it may be sufficient for detecting the occurrence of an animal in heat, may not accurately register movement patterns.

EP 2852280 discloses a Light Emitting Diod, LED, luminaire for use in dairy barns. The LED luminaire comprises a base plate on which a first LED arrangement is provided. The LED arrangement comprises a plurality of LEDs of a first type having a peak wavelength in the wavelength range of between 500 and 600 nm. The LED arrangement also comprises a least one LED of a second type having a wavelength range between 440 and 480 nm. There is also an optical system for distributing the intensity of light emitted from the LEDs such that the intensity peak is not directed straight downwards. There are further LED arrangements which are adapted to different conditions such as being suitable for night lightening. However, the LED luminaire is not adaptable to dynamic conditions such different light conditions inside a barn, due to weather conditions and the time of year.

### Summary

The object of the present invention is to obviate at least some of the above disadvantages and provide an improved method and light assembly for individual tracking and registering of movement of livestock and other animals that may be kept indoors in periods and at the same time dynamically control the illumination inside a building for keeping the livestock. In particular it is an object to provide a simple light assembly, which is easy to set up and which does not need to be calibrated before it is put into operation.

According to one aspect there is provided a method of tracking livestock inside of a building for keeping the livestock. The method is performed by a light assembly arranged above the livestock. The light assembly comprises a light source, a camera, a controller and a communication interface. The method controls the output of the light source, with the controller, such that a light condition inside the building is adapted to a diurnal rhythm of the livestock. The camera retrieves a live view of the livestock in a field of view of the camera and transmits, with the communication interface, the retrieved live view of the livestock to a monitoring node.

In one embodiment the controlling of the output of the light source comprises that the camera measures the light condition inside the building and the controller compares the measured light condition with reference values for a desired light condition. The controller then controls the output of the light source when there is a difference in the comparison between the measured and desired light condition, such that the light condition in the building for keeping the livestock corresponds to the reference values for the desired light condition.

In another embodiment the camera also collects data relating to a motion of the livestock in the field of view of the camera and the controller compares the collected data with stored data associated with livestock in heat, and in response to finding a match between the collected data and the stored data transmits, with the communication interface, an alarm message to the monitoring node comprising information that there is livestock in heat.

In yet another embodiment the controller determines, by analysing the collected data or the retrieved live view, that there is livestock that has been still for more than a predetermined period of time, and in response thereto transmits, with the communication interface, an alarm message to the monitoring node comprising information that there is livestock that has been still for more than a predetermined time.

In still another embodiment the camera receives a light pulse indicating a position for a livestock identity reader and transmits, with the communication interface, information about the position for the livestock identity reader to the monitoring node.

According to another aspect there is provided a light assembly for tracking livestock inside of a building for keeping the livestock. The light assembly is arranged above the livestock and comprises a light source, a camera, a controller and a communication interface. The controller comprises a processor and a memory. The memory in turn comprises instructions which when executed by the processor causes the light assembly to control the output of the light source, with the controller, such that a light condition inside the building is adapted to a diurnal rhythm of the livestock, retrieve, with the camera, a live view of the livestock in a field of view of the camera and transmit, with the communication interface, the retrieved live view of the livestock to a monitoring node.

In one embodiment of the light assembly the camera is further caused to measure the light condition inside the building, the controller is caused to compare the measured light condition with reference values for a desired light condition and control the output of the light source when there is a difference in the comparison between the measured and desired light condition, such that the light condition in the building for keeping the livestock corresponds to the reference values for the desired light condition.

In another embodiment of the light assembly the camera is further caused to collect data relating to a motion of the livestock in the field of view of the camera, the controller is caused compare the collected data with stored data associated with livestock in heat and in response to finding a match between the collected data and the stored data the communication interface is caused to transmit an alarm message to the monitoring node comprising information that there is livestock in heat.

In another embodiment of the light assembly the controller is further caused to determine, by analysing the collected data or the retrieved live view, that there is livestock that has been still for more than a predetermined time, and in response thereto is the communication interface caused to transmit an alarm message to the monitoring node comprising information that there is livestock that has been still for more than a predetermined time.

In yet another embodiment of the light assembly the camera is further caused to receive a light pulse indicating a position for a livestock identity reader, and the communication interface is caused to transmit information about the position for the livestock identity reader to the monitoring node.

In one embodiment of the light assembly the light source may comprise light emitting diodes.

According to another aspect a light assembly array is provided comprising at least two light assemblies as described above arranged on a wire with a predetermined distance to each other.

According to another aspect, a computer program and a computer program product comprising computer readable code is provided, which when executed on a processor of the light assembly causes the light assembly to behave as described in previous sections.

There are many benefits with the present invention. Having the camera integrated in the light assembly will make it easier for the camera to track the livestock, since the closeness between the light source and the camera will reduce shadows in the line-of sight of the camera, especially as the light assembly is arranged above the livestock. Shadows are a problem today when tracking livestock. Yet another advantage is that the camera may also be used as a sensor for dynamically controlling the light depending on the ambient conditions.

The light assembly is easy to set up without any need for calibration. Especially beneficial is it when two or more light assemblies are arranged with a predetermined distance to each other on a wire. Such a system is very easy to set up. Furthermore, the camera provided in the light assembly also makes it possible to receive position information, in form of a light pulse, from a livestock ID reader when they are positioned in the building for keeping livestock. Further possible features and benefits of this solution will become apparent from the detailed description below.

### Brief description of drawings

The solution will now be described in more detail by means of exemplary embodiments and with reference to the accompanying drawings, in which:
Fig. 1 is an overview of light assemblies for tracking livestock arranged inside of a building for keeping the livestock.
Fig. 2 is a block diagram illustrating a light assembly in more detail, according to possible embodiments.
Fig. 3 is a block diagram illustrating a livestock monitoring system, of which the light assembly may be a part.
Fig. 4 is a flowchart of a method performed by the light assembly, according to different embodiments.
Fig. 5 is a flowchart of the method performed by the light assembly according to another possible embodiment.
Fig. 6 is a flowchart of the method performed by the light assembly according to yet another possible embodiment.
Fig 7 is a flowchart of a method performed by the light assembly according to one possible embodiment.

### Detailed description

Briefly described, a solution is provided to enable tracking of livestock together with dynamically controlling the light inside a building for keeping the livestock without the hassle of calibration and without troublesome shadows.

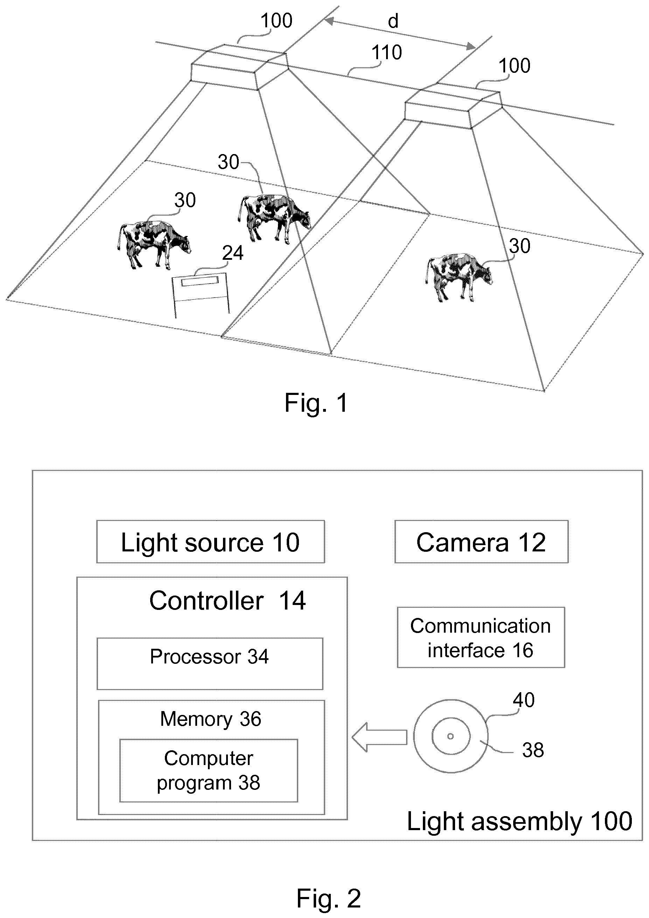

Fig. 1 is an overview of light assemblies for tracking livestock arranged inside of a building for keeping the livestock. The livestock may be any domesticated animal raised in an agricultural setting to produce commodities such as food, fiber, and labor. The present invention is directed towards use inside of a building for keeping livestock, often referred to as barn. Thus in the context of the present invention the term barn will be used for any building in which the livestock is kept.

Fig.1 shows two light assemblies 100 arranged on a cable 110 with a distance d to each other and above the livestock 30 in a barn. The light assembly 100 is provided with a camera (not shown in Fig. 1) having a field-of-view shown with dotted lines. As is evident in Fig. 1 the two light assemblies 100 have overlapping field-of-views. Fig. 1 also discloses a livestock identity, ID, reader 24, which is part of a monitoring system and which is capable of communicating with the light assembly 100. The livestock ID reader 24 is able to read the identity of livestock 30 passing by the livestock ID reader 300 from some type of tag carried by the livestock, such as a RFID tag. It should be understood that Fig. 1 only, for illustrative purposes, shows a limited space of a normal sized barn and that there may be an arbitrary number of light assemblies 100 and livestock ID readers 24, the number being adapted to the size of the barn.

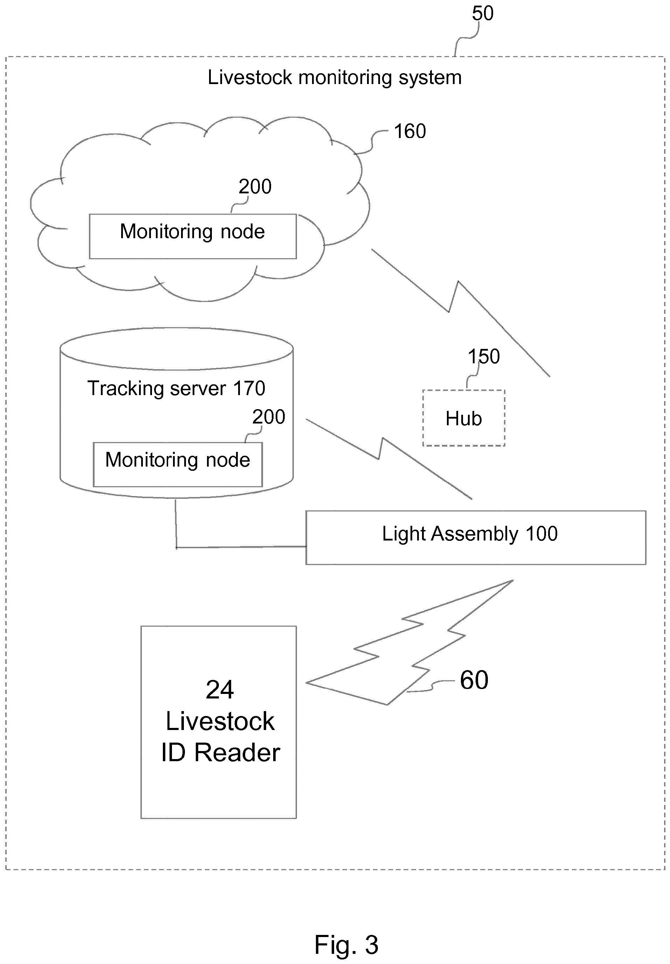

Turning now to Fig. 3 the livestock monitoring system 50 of which the light assembly 100 is a part will be further described. In addition to the light assembly 100 and the livestock ID reader 300 shown in Fig. 1 the monitoring system 50 also comprises a monitoring node 200. The monitoring node 200 may be provided on a tracking server 170. The tracking server 170 is connected to the light assembly 100, either via a cable or wireless via for example a local WIFI net. Physically the tracking server 170 may be housed in or close by the barn or in a server room somewhere remote from the barn.

Alternatively the monitoring node 200 is part of a cloud solution 160 and may be provided anywhere and be accessible through the Internet. Depending on the setup of the monitoring system, the monitoring system may also comprise a hub 150 for enhancing communication between different entities of the system. Furthermore, the livestock monitoring system 50 may also comprise some type of user equipment 180, UE, such as a mobile telephone, smartphone, laptop, computer tablet etc. for receiving alerts or alarms from the monitoring node 200. As is further evident from Fig. 3 the livestock ID reader 300 communicates with the light assembly 100 by sending light pulses 60, which will be closer described below.

The purpose of the monitoring node 200 is to collect data about the livestock inside the barn and analyze the data. If the monitoring node 200 in the analyze finds some deviations from normal livestock behavior it may send an alarm to for instance the UE 180. As will be described below also the light assembly 100 may analyze and collect data about the livestock.

Turning now to Fig. 2 the light assembly 100 will be described in greater detail. The light assembly 100 comprises a light source 10, preferably LEDs, the camera 12, a communication interface 16 and a controller 14 comprising a processor 34 and a memory 36.

The light source 10 comprises as mentioned above LEDs, which are very energy efficient and easy to control with the controller 14. Of course there are also other light sources that may be used such as halogen lamps or fluorescent lamps. The benefit with LEDs in addition to their energy efficiency is that they allow a greater flexibility when it comes to designing the color temperature of the light source 10.

The camera 12 is typically a simple RGB camera, but of course also other cameras may be used. The controller 14 may be tailor made for this application or be an off-the-shelf processor and memory configured for this application. Thus memory 36 may have stored a computer program 38, which comprises computer program code. The computer program code is adapted to implement the method, if executed on the processor 34, of tracking livestock inside the barn.

As an alternative the computer program 38 may be stored on a computer readable storage medium 40 of a computer program product. Such a computer program product may for example be a USB-stick or CD. The computer program 38 may of course also be downloaded directly to the memory 36 via the communication interface 16. The communication interface 16 is configured to be able to communicate with other entities of the monitoring system 50, such as the livestock ID reader 24, the monitoring node 200, the hub 150 or the user equipment 180.

Now the light assembly 100 in Fig. 2 will be closer described as the computer program 38 and its instructions stored in the memory 36 are executed by the processor 34. This execution causes the light assembly 100 to control the output of the light source 10, such that a light condition inside the building is adapted to a diurnal rhythm of the livestock. The diurnal rhythm may vary depending on the type of livestock. Usually this means that there should be "full" light during the daytime and only little light during the nighttime. The light assembly 100 is further caused to by means of the camera 12 to retrieve a live view of the livestock in a field of view of the camera 12 and transmit, by means of the communication interface 16, the retrieved live view of the livestock to the monitoring node 200.

In one embodiment the light assembly 100 may also be caused to control the output of the light source 10 such that the output is not only adapted to the diurnal rhythm of the livestock, but also to the ambient light conditions in the barn. Traditionally a light assembly 100 in a barn is turned on during the daytime and turned off during the nighttime. However, if there for example is a sunny day the light required is less than what is required on a cloudy day. The light conditions may also vary over the time of year. Thus in order to create a more even or desired illumination of the barn independently of the ambient conditions the light assembly 100 is caused to measure, by means of the camera 12, the light condition inside the barn, compare, by means of the controller 14, the measured light condition with reference values for a desired light condition. These reference values may be stored in the memory 36. If there is a difference in the comparison between the measured and desired light condition the controller 14 of the light assembly 100 is caused to control the output of the light source 10 such that the light condition in the barn corresponds to the reference values for the desired light condition. Thus in this fashion the light assembly 100 will always keep the output of the light source 10 at a desired value.

In another embodiment the camera 12 of the light assembly 100 is caused to collect data relating to a motion of the livestock in the field of view of the camera 12 and compare, by means of the controller 14, the collected data with stored motion data associated with some kind of deviation from normal behaviour of the livestock. Such motion data may be very useful especially if it is compared with different types of motion data stored data in the memory 36 of the light assembly 100. The stored data may for example be associated with livestock in heat, immovable livestock, or recognizable motion patterns or resting patterns related to different types of diseases or ailments, such as lameness or eating disorder etc. Thus, in one embodiment the controller 14 of the light assembly 100 is caused to compare the collected tracking data with stored data associated with livestock in heat, and in response to finding a match between the collected data for an individual 30 of the livestock and the stored data transmit an alarm message, by means of the communication interface 16 to the monitoring node 200 comprising information that there is livestock in heat. The monitoring mode 200 may in turn send the alarm message to the UE 180. It is of course also possible that the light assembly 100 has a communication interface that has the capabilities to send the alarm message directly from the light assembly 100, via the communication interface 16 to the UE 180. The UE 180 may be a mobile phone, a smart phone, a computer tablet, a laptop etc. The alarm message could for example be in form of a text message, such as a Small Message Service, SMS, or an e-mail.

In another embodiment the light assembly 100 is caused to analyse the collected tracking data and determine, by means of the controller 14, that there is an individual 30 of the livestock that has been still, i.e. not moved, for more than a predetermined period of time, and in response thereto transmit an alarm as mentioned above. This time the alarm message instead comprises information that there is livestock that has been still for more than a predetermined time together with information about which individual 30 of the livestock that has not moved. As is understood by a person skilled in the art there may be many other conditions connected to the motion pattern of the livestock that may be analyzed and which may lead to the sending of alarm messages if some criteria are fulfilled.

In one embodiment the camera 12 of the light assembly 100 may further be caused to receive a light pulse or burst indicating a position for the livestock identity reader 24 and in response thereto transmit, with the communication interface 16, information about the position for the livestock ID reader 24 to the monitoring node 200. The livestock ID reader 24 is configured to read the ID of, for example, a cow passing the livestock ID reader 24. The ID is stored together with a time stamp indicating the time of passage of the cow. Furthermore, the livestock ID reader 24 comprises a light burst generator configured to send a light pulse or burst to be received by the camera 12 of the light assembly 100. The light pulse or burst may comprise information about the identity of the individual animal 30 that is passing the livestock ID reader 24 together with the time stamp. Alternatively this information could of course also be sent wireless to the communication interface 16 of light assembly 100 via a WIFI-net or the like. However, sending a light pulse or burst has the benefit that the camera 12 that receives the light pulse may determine the position from where the light pulse is sent, i.e. the position of the livestock ID reader 24. Since the position of livestock ID reader 24 is retrieved in such an easy and simple manner there is no need for any calibration or lining up of the livestock ID reader 24 during set up. It is also easy to move the livestock ID reader 24 without that it affects the setup of the monitoring system 50 of which the light assembly 100 may be a part.

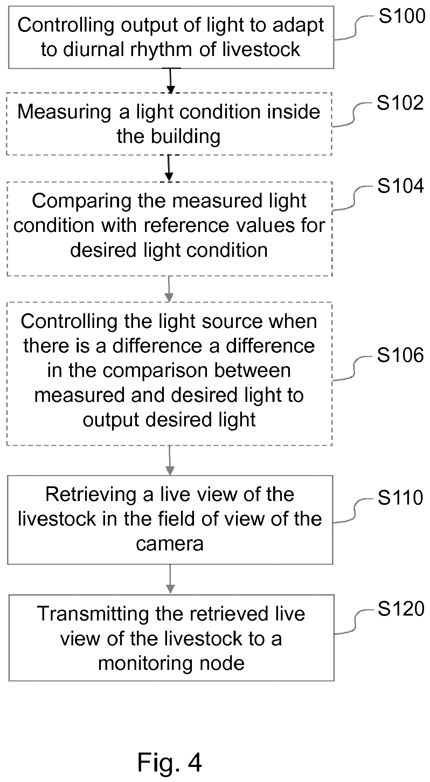

Turning to Fig. 4 a flowchart for the method of tracking livestock inside of a barn will be described. Method steps shown with dotted lines are optional steps. The method is performed by the light assembly 100 which, as mentioned above, is arranged above the livestock. In step S100 of the method the controller controls the output of the light source 10, such that a light condition inside the building is adapted to a diurnal rhythm of the livestock. In step S110 the camera 12 retrieves a live view of the livestock in the field of view of the camera 12 and in step S120 the communication interface 16 transmits the retrieved live view of the livestock to the monitoring node 200.

As mentioned above the output of the light source 10 may not only be controlled to be adapted to the diurnal rhythm of the livestock, but also to the ambient light conditions in the barn. Thus in a further embodiment the method also comprises a step 102 in which the camera 12 measures the light condition inside the building and the controller 14 compares, in step S104, the measured light condition with reference values for a desired light condition. If there is a difference in the comparison between the measured and desired light condition the controller 14 controls, in step S106 the output of the light source 10 such that the light condition in the building for keeping the livestock corresponds to the reference values for the desired light condition.

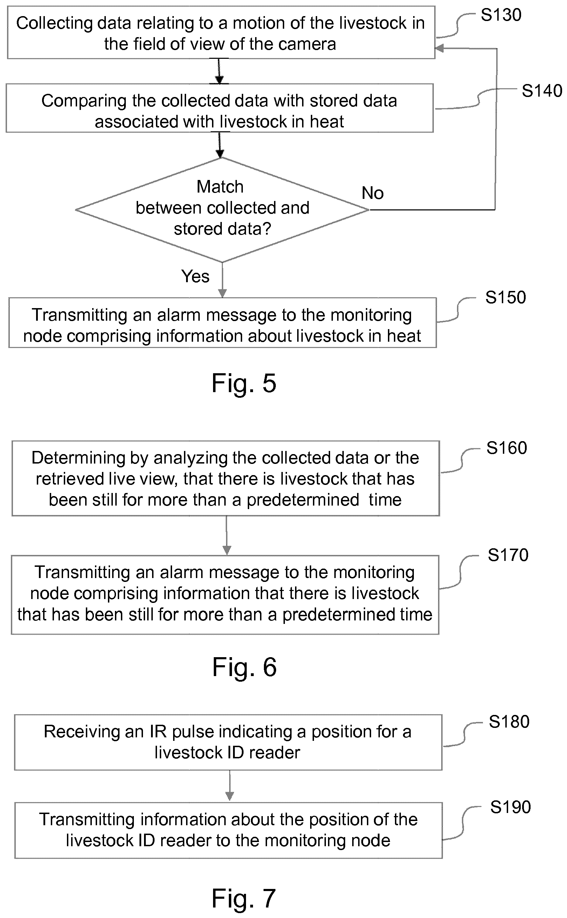

Turning now to Fig. 5 another embodiment of the method will be described. The method comprises a step S130 in which the camera 12 collects data relating to a motion of the livestock in the field of view of the camera 12. The controller 14 then compares, in step S140, the collected data with stored data associated with livestock in heat, and in response to finding a match between the collected data and the stored data the communication interface 16 transmits, in step S150 an alarm message to the monitoring node 200 comprising information that there is livestock in heat. As mentioned above the alarm message may also be sent directly to a UE 180 instead. If no match is found between the collected data and the stored data the method jumps back to step S130 and collects new data relating to the motion of the livestock.

In a further embodiment, shown in Fig. 6, the controller 14 determines, in step S160, by analysing the data collected in step S130 or the retrieved live view, that there is livestock that has been still for more than a predetermined period of time and in response thereto the communication interface 16 transmits, in step S170, an alarm message to the monitoring node 200 or the UE 180 comprising information that there is livestock that has been still for more than a predetermined time.

It should be understood that there may be numerous other states in which the livestock may be in and that can be diagnosed by analyzing tracking data obtained by the camera 12. If there is a special motion pattern or resting pattern associated to a special state or condition for the livestock this state or condition may be determined with the present invention and an alarm message may also be sent as a response thereto. This is a great benefit for a farmer, since he or she can spend lesser time in the barn and still get an alarm if something out of the ordinary happens to the livestock.

In yet another embodiment of the method, shown in Fig. 7, that is performed by the light assembly 100 the camera 12 receives, in step S180, a light pulse indicating a position for the livestock identity reader 24 and in response thereto the communication interface 16 transmits, in step S190, information about the position for the livestock ID reader 24 to the monitoring node 200 or any other node or device that needs the information about the livestock ID reader 24.

While the solution has been described with reference to specific exemplary embodiments, the description is generally only intended to illustrate the inventive concept and should not be taken as limiting the scope of the solution. For example the described processors may comprise a single Central Processing Unit (CPU), or could comprise two or more processing units. For example, the processors may include general purpose microprocessors, instruction set processors and/or related chips sets and/or special purpose microprocessors such as Application Specific Integrated Circuits (ASICs), Field Programmable Gate Arrays (FPGAs) or Complex Programmable Logic Devices (CPLDs). The processors may also comprise a storage for caching purposes.

The computer programs may be carried by computer program products in the different nodes or entities of the monitoring system, in the form of memories having a computer readable medium and being connected to the processors. The computer program products may be carried by a medium, such as CD, DVD, flash memory, or downloadable objects. Each computer program product or memory thus comprises a computer readable medium on which the computer program is stored e.g. in the form of computer program units. For example, the memories may be a flash memory, a Random-Access Memory (RAM), a Read-Only Memory (ROM) or an Electrically Erasable Programmable ROM (EEPROM), and the program units could in alternative embodiments be distributed on different computer program products in the form of memories within the described monitoring system.

## Claims

1. A method of tracking livestock inside of a building for keeping the livestock, the method being performed by a light assembly (100) arranged above the livestock, said light assembly (100) comprising a light source (10), a camera (12), a controller (14) and a communication interface (16), the method comprising:
- controlling (S100) the output of the light source (10), with the controller (14), such that a light condition inside the building is adapted to a diurnal rhythm of the livestock,
- retrieving (S110), with the camera (12), a live view of the livestock in a field of view of the camera (12), and
- transmitting (S120), with the communication interface (16), the retrieved live view of the livestock to a monitoring node (200).

2. The method according to claim 1, wherein the step (S100) of controlling the output of the light source (10) further comprises:
- measuring (S102), with the camera (12), the light condition inside the building,
- comparing (S104), with the controller (14), the measured light condition with reference values for a desired light condition, and
- controlling (S106) the output of the light source (10), with the controller (14), when there is a difference in the comparison between the measured and desired light condition, such that the light condition in the building for keeping the livestock corresponds to the reference values for the desired light condition.

3. The method according to claim 1 or 2, further comprising:
- collecting (S130), with the camera (12), data relating to a motion of the livestock in the field of view of the camera (12),
- comparing (S140), with the controller (14), the collected data with stored data associated with livestock in heat, and in response to finding a match between the collected data and the stored data,
- transmitting (S150), with the communication interface (16), an alarm message to the monitoring node (200) comprising information that there is livestock in heat.

4. The method according to any of claims 1 to 3, further comprising:
- determining (S160), with the controller (14), by analysing the collected data or the retrieved live view, that there is livestock that has been still for more than a predetermined period of time, and in response thereto
- transmitting (S170), with the communication interface (16), an alarm message to the monitoring node (200) comprising information that there is livestock that has been still for more than a predetermined time.

5. The method according to any of claims 1 to 4, further comprising:
- receiving (S180), with the camera (12), a light pulse indicating a position for a livestock identity reader (24), and
- transmitting (S190), with the communication interface (16), information about the position for the livestock identity reader (24) to the monitoring node (200).

6. A light assembly (100) for tracking livestock inside of a building for keeping the livestock, wherein the light assembly (100) is arranged above the livestock and comprises a light source (10), a camera (12), a controller (14) and a communication interface (16), and wherein the controller (14) comprises a processor (34) and a memory (36), the memory (36) comprising instructions which when executed by the processor (34) causes the light assembly (100) to:
- control the output of the light source (10), with the controller (14), such that a light condition inside the building is adapted to a diurnal rhythm of the livestock,
- retrieve, with the camera (12), a live view of the livestock in a field of view of the camera (12), and
- transmit, with the communication interface (16), the retrieved live view of the livestock to a monitoring node (200).

7. The light assembly (100) according to claim 6, which, in order to control the output of the light source (10) is further caused to:
- measure, with the camera (12), the light condition inside the building,
- compare, with the controller (14), the measured light condition with reference values for a desired light condition, and
- control the output of the light source (10), with the controller (14), when there is a difference in the comparison between the measured and desired light condition, such that the light condition in the building for keeping the livestock corresponds to the reference values for the desired light condition.

8. The light assembly (100) according to claim 6 or 7, which is further caused to:
- collect, with the camera (12), data relating to a motion of the livestock in the field of view of the camera (12),
- compare, with the controller (14), the collected data with stored data associated with livestock in heat, and in response to finding a match between the collected data and the stored data
- transmit, with the communication interface (16), an alarm message to the monitoring node (200) comprising information that there is livestock in heat.

9. The light assembly (100) according to any of claims 6 to 8, which is further caused to:
- determine, with the controller (14), by analysing the collected data or the retrieved live view, that there is livestock that has been still for more than a predetermined time, and in response thereto
- transmit, with the communication interface (16), an alarm message to the monitoring node (200) comprising information that there is livestock that has been still for more than a predetermined time.

10. The light assembly (100) according to any of claims 6 to 9, which is further caused to:
- receive, with the camera (12), a light pulse indicating a position for a livestock identity reader (24), and
- transmit, with the communication interface (16), information about the position for the livestock identity reader (24) to the monitoring node (200).

11. The light assembly (100) according to any of claims 6 to 10, wherein the light source (10) comprises light emitting diodes.

12. A light assembly array comprising at least two light assemblies (100) according to any of claims 6 to 11 arranged on a wire with a predetermined distance, d, to each other.

13. A computer program (38) comprising computer program code, the computer program code being adapted, if executed on a processor (36), to implement the method according to any one of the claims 1 to 5.

14. A computer program product comprising a computer readable storage medium (40), the computer readable storage medium having the computer program (38) according to claim 13.
